# EUROPÄISCHE PATENTSCHRIFT

(11) **EP 1 915 539 B1**
(45) Veröffentlichungstag und Bekanntmachung des Hinweises auf die Patenterteilung: **09.09.2009**
(21) Anmeldenummer: 06776355.7
(22) Anmeldetag: 22.07.2006
(51) Int. Cl.: F16B 7/18

(54) **KIPPVERBINDER**
TILTING CONNECTOR
DISPOSITIF DE RACCORDEMENT BASCULANT

(30) Priorität: 17.08.2005 DE 202005013097 U
(43) Veröffentlichungstag der Anmeldung: 30.04.2008
(73) Patentinhaber: STAUSS, Ulrich, 78628 Rottweil (DE)
(72) Erfinder: STAUSS, Ulrich, 78628 Rottweil (DE)
(74) Vertreter: Nüsse, Stephan
(86) Internationale Anmeldenummer: PCT/EP2006/007243
(87) Internationale Veröffentlichungsnummer: WO 2007/019941

(56) Entgegenhaltungen:
- DE-C1- 4 127 284
- DE-U1- 9 409 015

## Beschreibung

Die Erfindung betrifft einen Kippverbinder zum Festlegen in einer mit einer Hinterschneidung versehenen Nut eines ersten Profils, aufweisend: einen Sockel und einen von dem Sockel aufragenden Steg zum seitlichen Festlegen des Kippverbinders in der Nut, wobei ein vom Steg überstehender Sockelbereich eine Anschlagfläche zum Hintergreifen der Hinterschneidung bildet, und ein erstes Loch für eine Ankerschraube zur Einführung in ein zweites Profil und ein zweites Loch für eine Hebelschraube. Die Erfindung führt auch auf einen Profilverbund.

Ähnliche Verbinder sind aus DE 94 09 015 U1 und DE 41 27 284 C1 für dort offenbarte Profilkonstruktionen aus Profilstäben bekannt. Diese weisen mindestens jeweils eine mit mindestens einer Hinterschneidung versehene Längsnut auf, wobei zumindest ein Teil der Profilstäbe mindestens eine Längsbohrung aufweist, die zumindest an einem ihrer Enden ein Gewinde aufweist, das für den Eingriff mit einer Ankerschraube vorgesehen ist, mittels der ein von der Ankerschraube durchsetzter und mindestens einen Schenkel aufweisender Verbinder auf dem zugehörigen ersten Profilstab festlegbar ist, der in die Längsnut des zu verbindenden zweiten Profilstabs so eingreift, dass er mindestens eine Hinterschneidung mit einem Schenkel hintergreift. Der Verbinder ist mit einem vorgebbaren Spiel auf dem ersten Profilstab festlegbar und greift unter zumindest teilweisem Ausgleich dieses Spiels in die Längsnut des zweiten Profilstabs ein.

Bei den dort offenbarten Verbindern handelt es sich jedoch nicht um einen Kippverbinder. Vielmehr weist der in DE 41 27 284 C1 offenbarte Verbinder eine ihn vollständig durchgreifend Bohrung mit Innengewinde auf, in dem eine zweite Schraube aufgenommen ist, die sich mit ihrem einen Ende gegen die erste Schraube so abstützt, dass der Verbinder mit mindestens einem Schenkel so gegen ein Stegteil einer Hinterschneidung gepresst wird, dass hierdurch über den Verbinder die Profilstäbe fest miteinander verbunden werden. Der genannte Verbinder vermittelt also einen Pressdruck, welchen die zweite Schraube auf den Kopf der Ankerschraube ausübt.

Dieses Stand-der-Technik-Konzept ist noch verbesserungswürdig.

Nachteilig dabei ist vor allem, dass die Verwendung einer Kopfschraube als Ankerschraube zwingend ist, da die zweite Schraube sich am Kopf der Ankerschraube abstützt, um den Pressdruck über den Verbinder zu vermitteln. Dies wiederum erfordert, dass die Kopfschraube mit ihrem Kopf über den Sockel des Verbinders hinausschaut, was einen zusätzlichen Platzbedarf darstellt. Das genannte Konzept ist somit nicht für beliebig flache Nuten einsetzbar, vielmehr müssen die verwendeten Schraubenkombinationen jeweils auf eine Nuttiefe angepasst werden. Dies hat zur Folge, dass jedenfalls eine gewisse Bindung an Normprofile besteht.

Da Profilteile der erläuterten Art oftmals - zum Beispiel bei Messeständen und ähnlichen Aufbauten - unter Zeitdruck und unter Wahrung flexibler Einsatzmöglichkeiten betreffend unterschiedliche Größen und Konstruktionsarten eingesetzt werden, ist es wünschenswert, möglichst flexible und vielseitig einsetzbare Verbindungselemente - unabhängig von der Art der verwendeten Profile - einsetzen zu können. Gleichzeitig soll eine Montage dennoch einfach, schnell und verdrehsicher erfolgen.

An dieser Stelle setzt die Erfindung an, deren Aufgabe es ist, einen besonders flexibel, leicht und gleichzeitig verdrehsicher zu arretierenden Verbinder anzugeben, der insbesondere auch in flachen Nuten eines Profils einführbar ist. Aufgabe der Erfindung ist es auch, einen entsprechenden Profilverbund anzugeben. Die Erfindung führt auch ein Verfahren auf zum Verbinden eines ersten Profils mit einem zweiten Profil, das die formulierte Aufgabe löst.

Die Aufgabe hinsichtlich des Verbinders wird gelöst durch einen eingangs genannten Kippverbinder, bei dem erfindungsgemäß vorgesehen ist, dass
- die Anschlagfläche einen ersten Anschlagbereich und einen zweiten Anschlagbereich aufweist, die mit einem Freistellwinkel zueinander angeordnet sind und dadurch eine zwischen ihnen liegende Kippkante bilden, welche zur Anlage und Bildung eines Hebelansatzes auf einer Rückseite der Hinterschneidung vorgesehen ist.

Die Erfindung führt auch auf einen Profilverbund mit einem ersten Profil mit einer mit einer Hinterschneidung versehenen Nut und einem zweiten Profil mit einer Aufnahmeöffnung und einem Kippverbinder der genannten Art.

Die Aufgabe hinsichtlich des Verfahrens wird durch die Erfindung mit einem Verfahren zum Verbinden eines ersten Profils mit einer mit einer Hinterschneidung versehenen Nut und eines zweiten Profils mit einer Aufnahmeöffnung gelöst, bei dem ein Kippverbinder gemäß dem erläuterten erfinderischen Konzept verwendet wird, und bei dem
- die Ankerschraube im ersten Loch des Kippverbinders angeordnet wird,
- der Kippverbinder mit dem Steg seitlich in der Nut festgelegt wird,
- die Ankerschraube in die Aufnahmeöffnung des zweiten Profils eingeführt wird,
- die Hebelschraube im zweiten Loch des Kippverbinders angeordnet wird,
- die Hebelschraube auf dem Nutgrund des ersten Profils angeschlagen wird, derart, dass.
- die Kippkante auf einer Rückseite der Hinterschneidung anliegt und dort einen Hebelansatz bildet, wobei
- über einen zwischen Hebelansatz und Anschlagpunkt der Hebelschraube auf dem Nutgrund gebildeten Hebel bei weiterem Einführen der Hebelschraube der Kippverbinder gekippt wird und über die Ankerschraube das zweite Profil an das erste Profil gezogen wird.

Im Unterschied zum eingangs erläuterten Stand der Technik sieht das erfinderische Konzept die Verbindung zweier Profile über eine Zugspannung vor, die gemäß der Erkenntnis der Erfindung über den Kippverbinder mittels einer verstärkenden Hebelfunktion vermittelt wird. Dazu sieht der Kippverbinder eine Anschlagfläche vor, die einen ersten Anschlagbereich und einen zweiten Anschlagbereich aufweist, die mit einem Freistellwinkel zueinander angeordnet sind. Mit anderen Worten, der zweite Anschlagbereich ist von einer gedachten durchgehenden Extrapolation der ersten Anschlagfläche weg gekippt. Dadurch wird zwischen dem ersten Anschlagbereich und dem zweiten Anschlagbereich eine Kippkante gebildet. Die Kippkante liegt beim Festlegen des Kippverbinders auf einer Rückseite der Hinterschneidung des ersten Profils an und bildet dadurch den Hebelansatz des Hebels.

Wird nun eine Hebelschraube im zweiten Loch des Kippverbinders angeordnet und auf dem Nutgrund des ersten Profils angeschlagen, so führt der zwischen Hebelansatz und Anschlagpunkt gebildete Hebel bei weiterem Einführen der Hebelschraube zum Kippen des Kippverbinders um die Kippkante.

Somit wird der jenseits der Kippkante liegende Bereich des Kippverbinders mit der im ersten Loch eingeführten Ankerschraube von der Rückseite der Hinterschneidung des ersten Profilteils weg bewegt und zieht damit das zweite Profil an das erste Profil heran.

Das erfinderische Konzept realisiert damit im Unterschied zum Stand der Technik zunächst Platzvorteile in der Nut des ersten Profils, da die Ankerschraube vorteilhaft im ersten Loch versenkt werden kann und im Unterschied zum Stand der Technik nicht mehr mit ihrem Kopf als Zugdruckpunkt herhalten muss. Vielmehr sieht das erfinderische Konzept nunmehr eine wesentlich einfachere Handhabung vor, die zudem noch durch eine Hebelwirkung zu einem sicheren Arretieren des ersten Profils auf dem zweiten Profil führt. In vorteilhafter Weise müssen nämlich die Ankerschraube und die Hebelschraube nicht mehr mit ihren Eindrehlängen aufeinander abgestimmt werden, da diese unabhängig voneinander wirken. Der Hebelarm kommt ohne Justierprobleme zwischen dem Ansatz der Hebelschraube auf dem Nutgrund und dem Hebelansatz auf der Rückseite der Hinterschneidung bei Anlage der Kippkante zustande.

Damit lässt sich der Kippverbinder des erläuterten erfinderischen Konzepts bei jeder Art von Profil und mit verschiedensten Schrauben flexibel und gleichzeitig sicher anwenden. Eine Montage der Profile mit dem Kippverbinder gemäß dem erfinderischen Konzept erweist sich als besonders leicht, flexibel und schnell. Dies führt letztendlich zu einer Kostenersparnis, da sowohl Zubehör als auch Arbeitsaufwand eingespart werden kann. Eine Flexibilität wie sie mit dem vorgelegten erfinderischen Konzept erreicht wird, ist üblicherweise nur mit zusätzlichem Maschineneinsatz sowie zeitaufwendigen Bohr- und Fräsarbeiten möglich. Vorliegend reicht dazu der erläuterte Kippverbinder mit einer praktisch beliebigen Art von Ankerschraube oder Hebelschraube und einem Schraubwerkzeug.

Vorteilhafte Weiterbildungen der Erfindung sind den Unteransprüchen zu entnehmen und geben im Einzelnen vorteilhafte Möglichkeiten an, den vorgeschlagenen Kippverbinder hinsichtlich einfacher Handhabung und höherer Zugfestigkeit im Rahmen der Aufgabenstellung sowie hinsichtlich weiterer Vorteile weiterzubilden.

Vorzugsweise ist beim Kippverbinder vorgesehen, dass der Sockelbereich mit beidseitig gleicher Breite vom Steg übersteht. Dies führt zu einer entlang der Quererstreckung des Kippverbinders gleichmäßigen Lastverteilung.

Der Freistellwinkel ist vorzugsweise ein Winkel oberhalb von 135°, d.h. vorzugsweise ein Winkel zwischen 135° und 180°. Mit anderen Worten, der zur Waagerechten gemessene Winkel ist vorzugsweise ein spitzer Winkel. Insbesondere ist der Freistellwinkel ein Winkel zwischen 160° und 170°, insbesondere ein Winkel bei 165°. Es hat sich nämlich gezeigt, dass bei einer Abkippung des zweiten Anschlagbereiches zur Waagerechten um etwa 15° sich für fast alle Profilteile eine ausreichende Kippamplitude realisieren lässt, um eine sichere Arretierung eines ersten Profils und eines zweiten Profils zu gewährleisten.

In einer besonders bevorzugten Weiterbildung der Erfindung ist vorgesehen, dass das erste Loch zur Aufnahme der Ankerschraube ein im Steg angeordnetes Senkloch mit Ansatz im Bereich des ersten Anschlagbereiches ist und eine im Wesentlichen senkrecht zum ersten Anschlagbereich ausgerichtete Achse aufweist. Die Ankerschraube ist damit praktisch im Wesentlichen senkrecht zum Kippverbinder durchgeführt. Das zweite Profil lässt sich so besonders gut anschließen.

Insbesondere ist bevorzugt, dass das erste Loch einen zur Aufnahme der Ankerschraube mit seitlichem Spiel überdimensionierten Durchmesser aufweist. Dies führt dazu, dass beim Verkippen des Kippverbinders - und damit auch der Ankerschraube - ein Verklemmen derselben im Kippverbinder vermieden ist. Beispielsweise lassen sich darüber Schrägstellungen der Ankerschraube relativ zum Kipp-verbinder von bis zu 10° vom 90°-Winkel realisieren.

In einer weiteren besonders bevorzugten Ausführungsform ist vorgesehen, dass das zweite Loch zur Aufnahme der Hebelschraube ein im Steg angeordnetes Gewindeloch im Bereich des zweiten Anschlagbereichs ist und eine im Wesentlichen senkrecht zum zweiten Anschlagbereich ausgerichtete Achse aufweist. Dies hat den Vorteil, dass die Kopffläche der Hebelschraube praktisch wie der zweite Anschlagbereich gegen die Horizontale geneigt ist. Auf diese Weise lässt sich ein Schraubwerkzeug besonders vorteilhaft schräg ansetzen und die Hebelschraube lässt sich besonders leicht gegen den Nutgrund des ersten Profils anziehen.

Zweckmäßigerweise ist wie bereits erläutert, der Hebelarm zwischen Hebelansatz und Anschlag der Hebelschraube auf einem Nutgrund des ersten Profils gebildet.

Vorteilhafterweise verläuft eine Stegoberfläche parallel zum ersten Anschlagbereich.

In einer ersten Variante der letztgenannten Weiterbildung ist beim Kippverbinder vorgesehen, dass eine Stegoberfläche praktisch entlang der gesamten Längserstreckung parallel zum ersten Anschlagbereich verläuft. In diesem Fall wirkt die über die Stegoberfläche rausragende Hebelschraube vorteilhafterweise als Verdrehsperre. Zweckmäßigerweise weist die Hebelschraube dazu einen Kopf oder ein Gewinde auf, dessen Quererstreckung geringer als die Quererstreckung einer Nut des aufstehenden zweiten Profils ist.

In einer zweiten Variante der oben genannten Weiterbildung ist vorgesehen, dass im Bereich des zweiten Anschlagbereichs aus dem Steg ein Dom zur Aufnahme des zweiten Lochs aufragt. Mit anderen Worten ist in diesem Fall der llippverbinder - von der Seite gesehen - in Form eines Winkelformstücks gebildet, dessen erster Schenkel durch den Sockel mit aufragendem Steg und dessen zweiter Schenkel durch den aufragenden Dom gebildet ist.

Zweckmäßigerweise hat der Dom dabei eine Quererstreckung, welche die Quererstreckung des Stegs nicht übersteigt, vorzugsweise gleich der Quererstreckung des Stegs ist. Auf diese Weise ist gewährleistet, dass der Dom in die Nut des aufstehenden zweiten Profils passt und somit als Verdrehsicherung für das aufstehende zweite Profil dient. Insofern ist die hier erläuterte zweite Variante der Weiterbildung vorteilhafter als die erste Variante, da bereits ohne Hebelschraube eine Verdrehsicherung des aufstehenden zweiten Profils über den Dom realisiert ist.

Vorzugsweise weist der Dom eine Achse auf, die im Wesentlichen senkrecht auf dem zweiten Anschlagbereich steht. Im Prinzip könnte die Domachse auch einen anderen Winkel aufweisen, es hat sich jedoch gezeigt, dass wie bereits oben erläutert, ein Eindrehen der Hebelschraube besonders erleichtert ist, wenn diese schräg in den Kippverbinder geführt wird. Vorzugsweise weist der Dom eine Domoberfläche auf, die im Wesentlichen parallel zum zweiten Anschlagbereich verläuft - sie bildet damit, ähnlich wie der zweite Anschlagbereich, einen spitzen Winkel zur Horizontalen.

Vorteilhafterweise weist der überstehende Sockelbereich einen weiteren abgewinkelten Bereich auf. Es hat sich gezeigt, dass eine Abflachung des Kippverbinders im vorderen Bereich die Einführbarkeit desselben in eine Nut des ersten Profils wesentlich erleichtert.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Ausgestaltung der Erfindung wesentlich sein. Insbesondere gelten alle in einem offenbarten Zahlenbereich auftretenden Zahlenwerte als mit dem Zahlenbereich offenbart und können einzeln als auch in beliebiger Kombination und unterschiedlichsten Bereichen zur Weiterbildung der Erfindung dienen und einzeln beansprucht werden. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand.

Die Figuren der Zeichnung zeigen im Einzelnen in:
- Fig. 1:: einen Profilverbund eines ersten Profils und eines zweiten Profils mit einem Kippverbinder in einer Seitenansicht (A) und einer Extrapo- lationsansicht (B) gemäß einer besonders be- vorzugten Ausführungsform;
- Fig. 2:: eine perspektivische Darstellung einer beson- ders bevorzugten Ausführungsform eines Kipp- verbinders ohne (A) und mit (B) eingesetzter Hebel- und Ankerschraube in einer seitlichen perspektivischen Ansicht;
- Fig. 3:: den in Fig. 2 dargestellten Kippverbinder ohne (A) und mit (B) eingesetzter Hebel- und Anker- schraube in einer perspektivischen Draufsicht;
- Fig. 4:: den in Fig. 2 und Fig. 3 dargestellten Kipp- verbinder ohne (A) und mit (B) eingesetzter Hebel- und Ankerschraube in einer perspektivi- schen Ansicht von unten;
- Fig.: 5: eine Funktionszeichnung eines Kippverbinders gemäß einer besonders bevorzugten Ausführungs- form in einem Profilverbund mit einem ersten und zweiten Profil wie in Bezug auf Fig. 1 er- läutert;
- Fig. 6:: eine stirnseitige Ansicht eines Kippverbinders der Fig. 1 bis 5 als Funktionszeichnung (A) und mit Bemaßung (B) für eine Nut-10- Verbindung;
- Fig. 7:: eine Seitenansicht (A) und eine Draufsicht (B) auf einen Kippverbinder der Fig. 6 mit Bema- ßung für eine Nut-10-Verbindung.

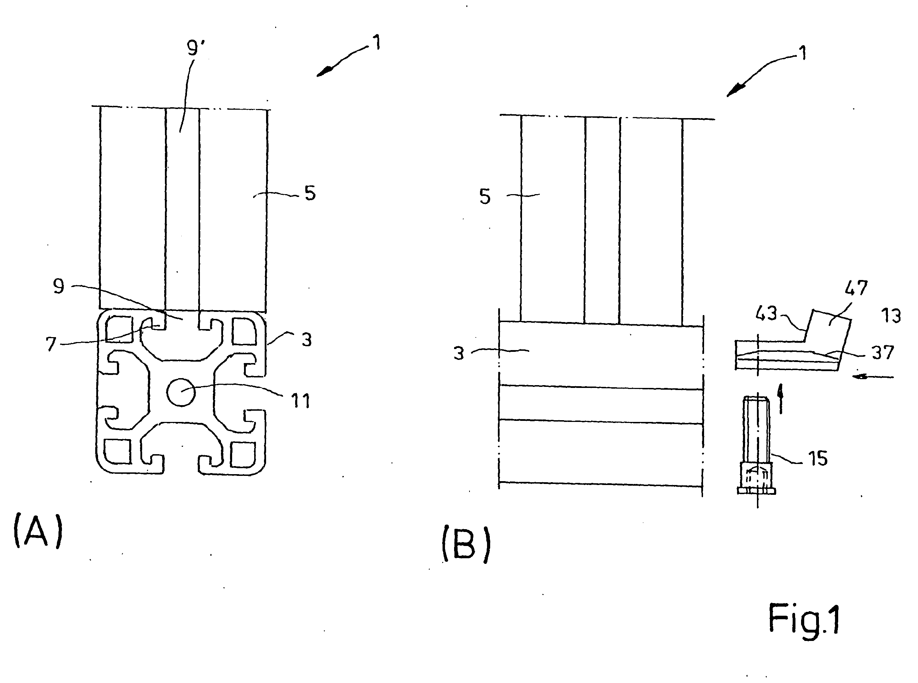

Fig. 1 zeigt einen Profilverbund 1 mit einem ersten Profil 3 und einem senkrecht auf dem ersten Profil 3 aufstehenden zweiten Profil 5. Ansicht (A) zeigt dabei das erste Profil 3 im Querschnitt. Dieses weist auf der Aufsitzseite für das zweite Profil 5 eine mit einer Hinterschneidung 7 versehene Nut 9 auf. Des Weiteren weist das zweite Profil 5, ähnlich wie das erste Profil 3, eine im zentralen Bereich mittig angeordnete Aufnahmeöffnung 11 auf.

Wie in der Extrapolationsansicht (B) von Fig. 1 zu sehen ist, dient die mit der Hinterschneidung 7 versehene Nut 9 des ersten Profils 3 zur Aufnahme des seitlich einzuführenden Kippverbinders 13. Dieser wird von einer Ankerschraube 15 von unten durchsetzt, welche zur Einführung in die Aufnahmeöffnung 11 des aufstehenden zweiten Profils 5 vorgesehen ist. In diesem Zustand liegt der Kippverbinder mit der Ankerschraube 15 mit Spiel in der mit der Hinterschneidung 7 versehenen Nut 9 des ersten Profils.

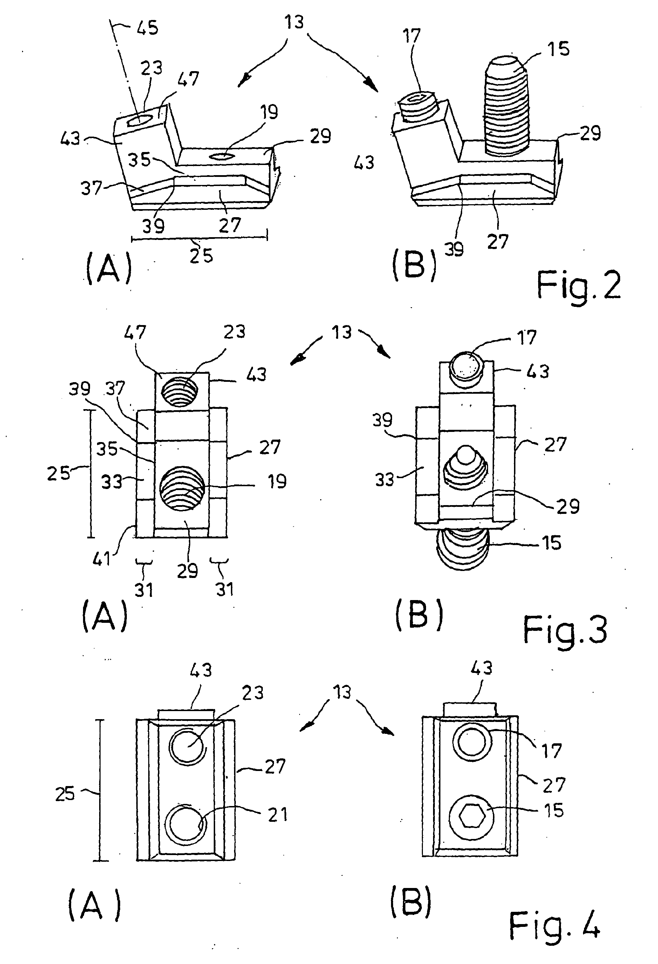

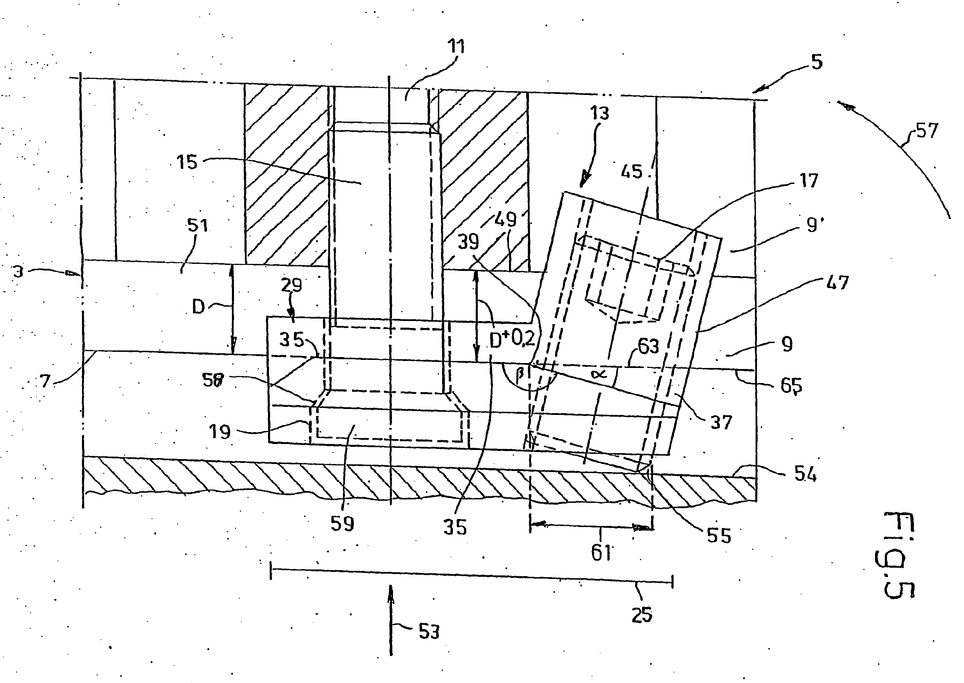

Fig. 2, 3 und 4 zeigt den Kippverbinder 13 jeweils in den Ansichten (A) und (B) ohne und mit Hebelschraube 17 bzw. Ankerschraube 15. Der Kippverbinder 13 weist zur Aufnahme der Ankerschraube 15 ein erstes Loch 19 auf, das zur Aufnahme der Ankerschraube 15 als ein Senkloch 19 mit Ansatz 21 gebildet ist. Des Weiteren weist der Kippverbinder 13 ein zweites Loch 23 auf, das zur Aufnahme der Hebelschraube 17 als ein Gewindeloch ausgebildet ist. Der Kippverbinder 13 selbst ist in Form eines entlang einer Längserstreckung 25 gestreckten Körpers gebildet. Dieser weist einen Sockel 27 auf und einen von dem Sockel 27 aufragenden entlang der Längserstreckung 25 sich erstreckenden Steg 29. Der Steg dient zum seitlichen Festlegen des Kippverbinders 13 in der Nut 9 des ersten Profils. Des Weiteren weist der Kippverbinder 13 einen vom Steg 29 mit beidseitig gleicher Breite überstehenden Sockelbereich 31 auf. Der Sockelbereich 31 bildet eine Anschlagfläche 33 zum Hintergreifen der Hinterschneidung 7 des ersten Profils 3. Gemäß dem Konzept der Erfindung weist die Anschlagfläche 33 einen ersten Anschlagbereich 35 und einen zweiten Anschlagbereich 37 auf, die mit einem in Fig. 5 näher erläuterten Freistellwinkel zueinander angeordnet sind und dadurch eine zwischen ihnen liegende Kippkante 39 bilden, welche zur Anlage und Bildung eines Hebelansatzes auf einer Rückseite der Hinterschneidung 7 vorgesehen ist. Bei der hier dargestellten besonders bevorzugten Ausführungsform weist der überstehende Sockelbereich 31 noch einen weiteren abgewinkelten Bereich 41 auf, welcher der besseren Einführbarkeit des Kippverbinders 13 in die unter der Hinterschneidung 7 liegenden Bereichs der Nut 9 des ersten Profils dient.

Des weiteren ist in Fig. 1 bis 4 dargestellt, dass im Bereich des zweiten Anschlagbereichs 37 aus dem Steg 29 ein Dom 43 zur Aufnahme des zweiten Lochs 23 aufragt. Dieser weist eine Achse 45 auf, welche im Wesentlichen senkrecht auf dem zweiten Anschlagbereich 37 steht. Insbesondere verläuft die Domoberfläche 47 im Wesentlichen parallel zum zweiten Anschlagbereich 37.

Wie in Fig. 5 dargestellt, wird der Kippverbinder 13 mit einer Ankerschraube 15 in der als zentrales Kernloch des zu befestigenden zweiten Profils 5 ausgebildeten Aufnahmeöffnung 11 so festgelegt, dass der Kippverbinder 13 leicht in die Nut 9 des ersten Profils 3 eingeschoben werden kann. Dabei wird die Ankerschraube 15 nur so weit in die Aufnahmeöffnung 11 eingedreht, dass vorzugsweise noch ein Spiel von mindestens 0,2 mm verbleibt. Der Abstand zwischen dem ersten Anschlagbereich 35 und der oberen Außenfläche 49 des ersten Profils 3 entspricht also im Wesentlichen der Dicke D des oberen Flügels 51 des ersten Profils 3 plus 0,2 mm.

Bringt man nun durch Verschieben des Kippverbinders 13 zusammen mit dem aufstehenden zweiten Profil 5 die Profilverbindung an eine gewünschte Position 53, so wird mit Eindrehen der schräg gestellten Hebelschraube 17 am Nutgrund 54 des ersten Profils 3 eine Abstützung 55 und gleichzeitig eine Kippbewegung 57 des Kippverbinders 13 um die Kippkante 39 herum mit dem durch die Distanz zwischen Kippkante 39 und Abstützung 55 bestehenden Hebelarm 61 erreicht. Durch die Kippbewegung 57 bewegt sich der.Kippverbinder 13 an seiner jenseits der Kippkante 39 liegenden Stelle 58 im Bereich des ersten Anschlagbereichs 35 auf die zunächst mit Spiel im als Senkloch ausgebildeten ersten Loch 19 sitzende Ankerschraube 15 mit versenktem Schraubenkopf 59 zu und zieht nach Erreichen des Schraubenkopfes 59 über denselben das zweite Profil 5 an das erste Profil 3 heran.

Um eine möglichst sichere Kippbewegung 57 zu erreichen, ist bei der in Fig. 5 dargestellten Ausführungsform das Senkloch 19 so groß ausgeführt, dass sich auch bei Schrägstellung des Senklochs 19 die Ankerschraube 15 in dem Senkloch 19 nicht verklemmt. Ab der Kippkante 39 ist, wie bereits anhand der Fig. 1 bis 4 erläutert, ein zweiter Anschlagbereich 37 des Kippverbinders 13 in einem spitzen Winkel, vorliegend in einem Winkel α von 15° freigestellt, d.h. gegen die Horizontale 63 geneigt. Mit anderen Worten, der Freistellwinkel β ist vorliegend ein Winkel von 165°. Im Unterschied zum Stand der Technik, wo sich eine Anschlagfläche vollständig lediglich entlang der Horizontalen 63 orientiert, ist gemäß dem Konzept der Erfindung bei der vorliegenden Ausführungsform eine Anschlagfläche mit einem ersten Anschlagbereich 35 und einem zweiten Anschlagbereich 37 versehen, die - zur Ausbildung der Kippkante 39 - mit einem Freistellwinkel β zueinander angeordnet sind, um eine Kippbewegung 57 des Kippverbinders 13 um die Kippkante 39 herum zu ermöglichen.

In etwa dem gleichen Winkel befindet sich bei der vorliegenden Ausführungsform ein als Verdrehsperre für das zweite Profil 5 wirkender Dom 43, da dieser die Nut 9 des ersten Profils 3 durchsetzt und in die Nut 9' des zweiten Profils 5 eingreift. Im Prinzip könnte der Dom 43 auch rechtwinklig zum Sockelbereich 31 oder zum ersten Anschlagbereich 35 ausgerichtet sein. Es hat sich jedoch als vorteilhaft erwiesen, dass der Dom 43 eine Achse 45 aufweist, die im Wesentlichen senkrecht auf dem zweiten Anschlagbereich 37 steht.

In einer hier nicht gezeigten Variante zu der in den vorliegenden Figuren gezeigten Ausführungsform kann eine Oberfläche eines Stegs 29 auch praktisch entlang der gesamten Längserstreckung 25 des Kippverbinders 13 verlaufen, mit anderen Worten, die Oberfläche des Stegs 29 könnte bei dieser Variante auch über die gesamte Längserstreckung 25 des Kippverbinders 13 beibehalten werden. In diesem Fall würde der als Verdrehsperre wirkende Dom 43 entfallen. Bei dieser Variante würde dann die Hebelschraube 17 als Verdrehsperre wirken. Eine solche Wirkung kann insbesondere dadurch verstärkt werden, dass die Hebelschraube 17 als eine längere Schraube ausgebildet wird, die gegebenenfalls einen Gewindedurchmesser aufweist, welcher in etwa der Breite der Nut 9' entspricht oder die Hebelschraube 17 kann einen entsprechend geformten Schraubenkopf aufweisen, welcher in etwa der Breite der Nut 9' entspricht.

Nachdem der Profilverbund wie in Fig. 5 gezeigt angeordnet ist, wird die Hebelschraube 17 auf dem Nutgrund 54 des ersten Profils 3 angeschlagen. In der Regel durchdringt sie nach dem Anziehen die Eloxalschicht an der den Anschlagpunkt definierenden Abstützung 55 und stellt auf diese Weise Leitfähigkeit und Verrutschsicherung her. Die Kippkante 39 liegt dann auf der Rückseite 65 der Hinterschneidung 7 an und bildet dort den Hebelansatz zur Ausbildung des Hebelarms 61 zwischen Hebelansatz 39 und Abstützung 55. Beim weiteren Einführen der Hebelschraube 17 wird der Kippverbinder 13 so lange gekippt, bis die Ankerschraube 15 das zweite Profil 5 in ausreichendem Maße an das erste Profil gezogen hat. Vorzugsweise wird dazu eine ausreichende Zugspannung erreicht.

Auf diese Weise wird eine besonders sichere und gleichzeitig einfach zu handhabende und flexible Arretierung des zweiten Profils 5 am ersten Profil 3 erreicht. Die der Nut 9' gegenüberliegende Nut des zweiten Profils 5 kann bei dem hier gezeigten Profilverbund aufgrund des auf der gegenüberliegenden Seite nicht in Erscheinung tretenden Kippverbinders mit Flächenelementen belegt werden.

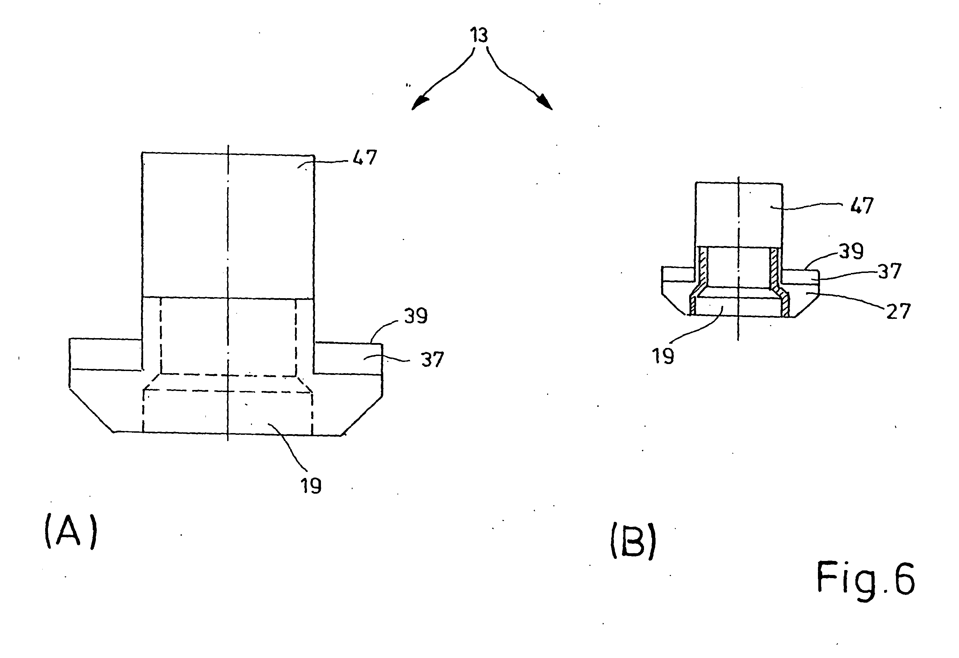

In Fig. 6 ist der Kippverbinder 13 der Fig. 5 in einer stirnseitigen Ansicht (A) gezeigt. In Ansicht (B) ist der gleiche Kippverbinder 13 maßstabgetreu als vorteilhafte Ausführung für eine Nut-10-Verbindung gezeigt.

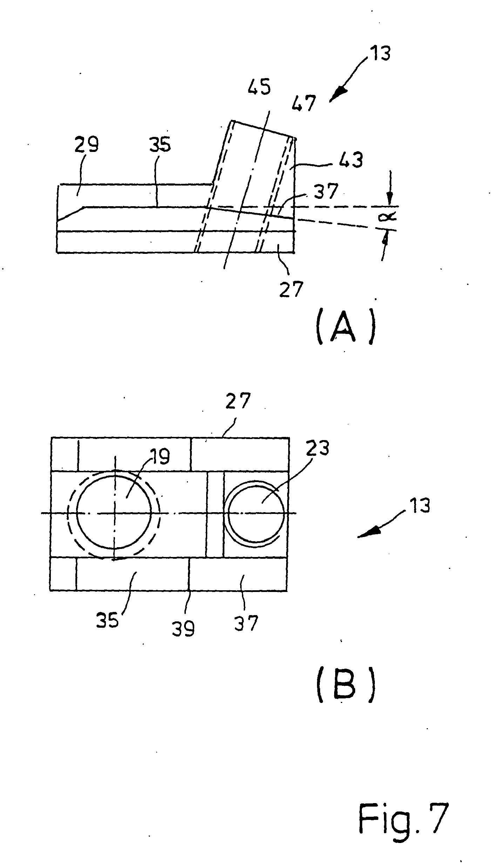

Fig. 7 zeigt den Kippverbinder der Ansicht Fig. 6 (B) als Seitenansicht (A) und als Draufsicht (B) maßstabgetreu für eine Nut-10-Verbindung. Entsprechende Bezugszeichen sind wie in den vorherigen Figuren benutzt.

Um ein erstes Profil 3 mit einer mit einer Hinterschneidung 7 versehenen Nut 9 und ein zweites Profil 5 mit einer Aufnahmeöffnung 11 verdrehsicher zu arretieren sieht die Erfindung einen Kippverbinder 13 zum Festlegen in einer mit einer Hinterschneidung 7 versehenen Nut 9 des ersten Profils 3 in Form eines entlang einer Längserstreckung 25 gestreckten Körpers vor, welcher aufweist: einen Sockel 27 und einen von dem Sockel 27 aufragenden, entlang der Längserstreckung 25 sich erstreckenden Steg 29 zum seitlichen Festlegen des Kippverbinders 13 in der Nut 9, wobei ein vom Steg 29 überstehender Sockelbereich 31 eine Anschlagfläche 33 zum Hintergreifen der Hinterschneidung 7 bildet, und ein erstes Loch 19 für eine Ankerschraube 15 zur Einführung in ein zweites Profil 5 und ein zweites Loch 23 für eine Hebelschraube 17. Dabei ist erfindungsgemäß vorgesehen, dass die Anschlagfläche 33 einen ersten Anschlagbereich 35 und einen zweiten Anschlagbereich 37 aufweist, die mit einem Freistellwinkel β zueinander angeordnet sind und dadurch eine zwischen ihnen liegende Kippkante 39 bilden, welche zur Anlage und Bildung eines Hebelansatzes auf einer Rückseite der Hinterschneidung 7 vorgesehen ist.

## Patentansprüche

1. Kippverbinder(13) zum Festlegen in einer mit einer Hinterschneidung (7) versehenen Nut (9) eines ersten Profils (3),
aufweisend:
- einen Sockel (27) und einen von dem Sockel (27) aufragenden Steg (29) zum seitlichen Festlegen des Kippverbinders (13) in der Nut (9), wobei
- ein vom Steg (29) überstehender Sockelbereich (31) eine Anschlagfläche (33) zum Hintergreifen der Hinterschneidung (7) bildet, und
- ein erstes Loch (19) für eine Ankerschraube (15) zur Einführung in ein zweites Profil (5) und ein zweites Loch (23) für eine Hebelschraube (17),
**dadurch gekennzeichnet, dass**
- die Anschlagfläche (33) einen ersten Anschlagbereich (35) und einen zweiten Anschlagbereich (37) aufweist, die mit einem Freistellwinkel (β) zueinander angeordnet sind und **dadurch** eine zwischen ihnen liegende kippkante (39) bilden, welche zur Anlage und Bildung eines Hebelansatzes auf einer Rückseite der Hinterschneidung (7) vorgesehen ist.

2. Kippverbinder nach Anspruch 1, **gekennzeichnet durch** einen entlang einer Längserstreckung (25) gestreckten Körper, wobei sich der Steg (29) entlang der Längserstreckung (25) erstreckt.

3. Kippverbinder nach Anspruch 1 oder 2, **dadurch gekennzeichnet, dass** der Sockelbereich (31) mit beidseitig gleicher Breite vom Steg übersteht.

4. Kippverbinder nach einem der Ansprüche 1 bis 3, **dadurch gekennzeichnet, dass** der Freistellwinkel (β) ein Winkel oberhalb von 135° ist, insbesondere ein Winkel zwischen 160° und 170°, vorzugsweise ein Winkel von 165°.

5. Kippverbinder nach einem der Ansprüche 1 bis 4, **dadurch gekennzeichnet, dass** das erste Loch (19) zur Aufnahme der Ankerschraube (15) ein im Steg (29) angeordnetes Senkloch mit Ansatz (21) im Bereich des ersten Anschlagbereichs (35) ist und eine im Wesentlichen senkrecht zum ersten Anschlagbereich (35) ausgerichtete Achse aufweist.

6. Kippverbinder nach einem der Ansprüche 1 bis 5, **dadurch gekennzeichnet, dass** das erste Loch (19) einen zur Aufnahme der Ankerschraube (15) mit seitlichem Spiel überdimensionierten Durchmesser aufweist.

7. Kippverbinder nach einem der Ansprüche 1 bis 6, **dadurch gekennzeichnet, dass** das zweite Loch (23) zur Aufnahme der Hebelschraube (17) ein im Steg (29) angeordnetes Gewindeloch im Bereich des zweiten Anschlagbereichs (37) ist und eine im Wesentlichen senkrecht zum zweiten Anschlagbereich (37) ausgerichtete Achse (45) aufweist.

8. Kippverbinder nach einem der Ansprüche 1 bis 7, **gekennzeichnet durch** einen zwischen Hebelansatz und Abstützung (55) der Hebelschraube (17) auf einem Nutgrund (54) des ersten Profils (3) gebildeten Hebelarm (61).

9. Kippverbinder nach einem der Ansprüche 1 bis 8, **dadurch gekennzeichnet, dass** eine Stegoberfläche parallel zum ersten Anschlagbereich (35) verläuft.

10. Kippverbinder nach Anspruch 9, **dadurch gekennzeichnet, dass** eine Stegoberfläche praktisch entlang der gesamten Längserstreckung (25) parallel zum ersten Anschlagbereich (35) verläuft.

11. Kippverbinder nach Anspruch 9, **dadurch gekennzeichnet, dass** im Bereich des zweiten Anschlagbereichs (37) aus dem Steg (29) ein Dom (43) zur Aufnahme des zweiten Lochs (23) aufragt.

12. Kippverbinder nach Anspruch 11, **dadurch gekennzeichnet, dass** der Dom (43) eine Querstreckung hat, welche die Quererstreckung des Stegs (29) nicht übersteigt, vorzugsweise gleich der Querstreckung des Stegs (29) ist.

13. Kippverbinder nach Anspruch 11 oder 12, **dadurch gekennzeichnet, dass** der Dom (43) eine Achse (45) aufweist, die im Wesentlichen senkrecht auf dem zweiten Anschlagbereich (37) steht.

14. Kippverbinder nach einem der Ansprüche 11 bis 13, **dadurch gekennzeichnet, dass** der Dom (43) eine Domoberfläche (47) aufweist, die im Wesentlichen parallel zum zweiten Anschlagbereich (37) verläuft.

15. Kippverbinder nach einem der Ansprüche 1 bis 14, **dadurch gekennzeichnet, dass** der überstehende sockelbereich (31) einen weiteren abgewinkelten Bereich (41) aufweist.

16. Profilverbund (1) mit einem ersten Profil (3) mit einer mit einer Hinterschneidung (7) versehenen Nut (9) und einem zweiten Profil (5) mit einer Aufnahmeöffnüng (11), und einem Kippverbinder (13) nach einem der Ansprüche 1 bis 15.

## Claims

1. Tilting connector (13) to be fixed in a groove (9) of a first profile (3), which groove is provided with an undercut (7),
comprising:
- a base (27) and a web (29) which protrudes from the base (27) for laterally fixing the tilting connector (13) in the groove (9),
- a base region (31), which projects from the web (29), forming a stop face (33) for engaging behind the undercut (7), and
- a first hole (19) for an anchoring screw (15) for insertion into a second profile (5), and a second hole (23) for a lever screw (17),
**characterised in that**
- the stop face (33) has a first stop region (35) and a second stop region (37) which are arranged at a release angle (β) to one another and thus form a tilting edge (39) which lies between them and is provided for support and formation of a lever attachment on a rear side of the undercut (7).

2. Tilting connector according to claim 1, **characterised by** a member extending along a longitudinal extent (25), the web (29) extending along said longitudinal extent (25).

3. Tilting connector according to either claim 1 or claim 2, **characterised in that** the base region (31) projects from the web by the same width on either side.

4. Tilting connector according to any one of claims 1 to 3, **characterised in that** the release angle (β) is an angle greater than 135°, in particular an angle between 160° and 170°, preferably an angle of 165°.

5. Tilting connector according to any one of claims 1 to 4, **characterised in that** the first hole (19) for receiving the anchoring screw (15) is a countersunk hole, which is arranged in the web (29) and has a projection (21) in the region of the first stop region (35), and has an axis which is oriented substantially perpendicular to the first stop region (35).

6. Tilting connector according to any one of claims 1 to 5, **characterised in that** the first hole (19) has a diameter which is oversized so as to receive the anchoring screw (15) with lateral play.

7. Tilting connector according to any one of claims 1 to 6, **characterised in that** the second hole (23) for receiving the lever screw (17) is a threaded hole, which is arranged in the web (29) in the region of the second stop region (37), and has an axis (45) which is oriented substantially perpendicular to the second stop region (37).

8. Tilting connector according to any one of claims 1 to 7, **characterised by** a lever arm (61) which is formed between the lever attachment and a support (55) of the lever screw (17) on a groove base (54) of the first profile (3).

9. Tilting connector according to any one of claims 1 to 8, **characterised in that** a web surface extends parallel to the first stop region (35).

10. Tilting connector according to claim 9, **characterised in that** a web surface extends parallel to the first stop region (35) virtually along the entire longitudinal extent (25).

11. Tilting connector according to claim 9, **characterised in that** a dome (43) for accommodating the second hole (23) protrudes from the web (29) in the region of the second stop region (37).

12. Tilting connector according to claim 11, **characterised in that** the dome (43) has a transverse extent which does not exceed the transverse extent of the web (29) and is preferably equal to the transverse extent of the web (29).

13. Tilting connector according to either claim 11 or claim 12, **characterised in that** the dome (43) has an axis (45) which is substantially perpendicular to the second stop region (37).

14. Tilting connector according to any one of claims 11 to 13, **characterised in that** the dome (43) has a dome surface (47) which extends substantially parallel to the second stop region (37).

15. Tilting connector according to any one of claims 1 to 14, **characterised in that** the projecting base region (31) has a further angled region (41).

16. Profile assembly (1) comprising a first profile (3) with a groove (9) provided with an undercut (7), a second profile (5) with a receiving opening (11), and a tilting connector (13) according to any one of claims 1 to 15.

## Revendications

1. Dispositif de raccordement basculant (13), pour fixation dans une rainure (9), munie d'une contre-dépouille (7), d'un premier profil (3),
présentant :
- un socle (27) et une nervure (29) sortant du socle (27), pour la fixation latérale du dispositif de raccordement basculant (13) dans la rainure (9), où
- une zone de socle (31), faisant saillie de la nervure (29), forme une surface de butée (33), pour la saisie par l'arrière de la contre-dépouille (7), et
- un premier trou (19), pour une vis d'ancrage (15), pour insertion dans un deuxième profil (5) et un deuxième trou (23) pour une vis de levier (17),
**caractérisé en ce que**
- la surface de butée (33) présente une première zone de butée (35) et une deuxième zone de butée (37), disposées avec un angle de réglage libre (β) l'une par rapport à l'autre et formant de ce fait une arête de basculement (39) située entre elles, prévue pour l'appui et la formation d'un appendice de levier sur une face arrière de la contre-dépouille (7).

2. Dispositif de raccordement basculant selon la revendication 1, **caractérisé par** un corps étiré le long d'une étendue longitudinale (25), la nervure (29) s'étendant le long de l'étendue longitudinale (25).

3. Dispositif de raccordement basculant selon la revendication 1 ou 2, **caractérisé en ce que** la zone de socle (31) ressort d'une largeur identique, de part et d'autre, de la nervure.

4. Dispositif de raccordement basculant selon l'une des revendications 1 à 3, **caractérisé en ce que** l'angle de réglage libre (β) est un angle supérieur à 135°, en particulier un angle compris entre 160° et 170°, de préférence un angle de 165°.

5. Dispositif de raccordement basculant selon l'une des revendications 1 à 4, **caractérisé en ce que** le premier trou (19), pour recevoir la vis d'ancrage (15), présente un trou fraisé de lamage ménagé dans la nervure (19), avec un appendice (21) dans la zone de la première zone de butée (35), et un axe orienté sensiblement perpendiculairement à la première zone de butée (35).

6. Dispositif de raccordement basculant selon l'une des revendications 1 à 5, **caractérisé en ce que** le premier trou (19) présente un diamètre surdimensionné, pour recevoir la vis d'ancrage (15) avec un jeu latéral.

7. Dispositif de raccordement basculant selon l'une des revendications 1 à 6, **caractérisé en ce que** le deuxième trou (23), pour recevoir la vis de levier (17) est un trou taraudé, ménagé dans la nervure (29), dans la région de la deuxième zone de butée (37) et présente un axe (45) orienté sensiblement perpendiculairement à la deuxième zone de butée (37).

8. Dispositif de raccordement basculant selon l'une des revendications 1 à 7, **caractérisé par** un bras de levier (61), formé entre l'appendice de levier et l'appui (55) de la vis de levier (17), sur un fond de rainure (54) du premier profil (3).

9. Dispositif de raccordement basculant selon l'une des revendications 1 à 8, **caractérisé en ce qu'**une surface de nervure s'étend parallèlement à la première zone de butée (35).

10. Dispositif de raccordement basculant selon la revendication 9, **caractérisé en ce qu'**une surface de nervure s'étend pratiquement le long de l'ensemble de l'étendue longitudinale (25), parallèlement à la première zone de butée (35).

11. Dispositif de raccordement basculant selon la revendication 9, **caractérisé en ce qu'**un dôme (43), pour recevoir le deuxième trou (23), ressort de la nervure (29), dans la région de la deuxième zone de butée (37).

12. Dispositif de raccordement basculant selon la revendication 11, **caractérisé en ce que** le dôme (43) présente une étendue transversale ne dépassant pas l'étendue transversale de la nervure (29), de préférence égale à l'étendue transversale de la nervure (29).

13. Dispositif de raccordement basculant selon la revendication 11 ou 12, **caractérisé en ce que** le dôme (43) présente un axe (45) sensiblement perpendiculaire à la deuxième zone de butée (37).

14. Dispositif de raccordement basculant selon l'une des revendications 11 à 13, **caractérisé en ce que** le dôme (43) présente une surface de dôme (47) s'étendant sensiblement parallèlement à la deuxième zone de butée (37).

15. Dispositif de raccordement basculant selon l'une des revendications 1 à 14, **caractérisé en ce que** la zone de socle 31) en saillie présente une autre zone (41) coudée.

16. Composite à profils (1), comprenant un premier profil (3), avec une rainure (9) munie d'une contre-dépouille (7), et un deuxième profil (5), avec une ouverture de logement (11), et un dispositif de raccordement basculant (13) selon l'une des revendications 1 à 15.
